# EUROPEAN PATENT APPLICATION

(11) **EP 1 143 368 A1**
(43) Date of publication of application: **10.10.2001**
(21) Application number: 01300268.8
(22) Date of filing: 12.01.2001
(51) Int. Cl.: G06F 17/60

(54) **Access apparatus and system for retail organisation internet site**

(30) Priority: 13.01.2000 GB 0000601
(71) Applicant: Pace Micro Technology Ltd, Saltaire, Shipley BD18 3LF (GB)
(72) Inventor: Hoath, William, Bury BL9 9QR (GB)
(74) Representative: Wood, Graham

(57) **Abstract**

The invention relates to the provision of a device which allows access to a particular site on, for example, the internet. The identity of the particular site to be accessed is determined with reference to an information carrier such as a card which is issued by an organisation. The card carries information which includes the site address or other site identification means and the information is obtained by the device which then initiates and controls the access to the particular site. This ensures that an organisation's customer can make quick and easy access to the organisations web site.

## Description

The invention to which this application relates is apparatus and a system which allows the user of data receiving apparatus to also transmit information and/or instructions to other organisations and, as a result of said instructions, receive selected services or goods from said organisations.

The generation of new technology in relation to broadcast data receivers (BDR's) which receive digital data which is transmitted from remote broadcasters such as television system broadcasters, is now well known as is the use of internet services. The receiver apparatus is typically provided in a premises and receives signals via satellite, cable or terrestrial means by which the data is broadcast. A further feature of this receiver apparatus is that it is provided with a communications link, which, in one case can be a telecommunications link, which allows the user of the receiver at the premises to transmit data from the receiver to a remote location or locations. This information can relate to, for example, to select to watch particular programmes for which a fee is payable, to provide audience research data, to participate in interactive shopping and internet services in general. Typically additional devices are also required to be used such as, for example, a personal organiser which can be inconvenient and furthermore the device are not directly associated with the particular organisation who is providing the goods. This can lead to confusion to the user as to from whom the goods are being ordered and also is not attractive to the retail organisation as they have no means by which to generate customer loyalty.

A further problem with the use of such apparatus at the present time is that for the user to gain access to a particular information site or display, they are required to follow a number of procedural steps, which are time consuming, can be difficult to follow and, in some instances can lead to the user giving up trying to access the internet site. This can lead to the retail organisation not receiving orders which they may otherwise have received.

It is also known from patent application W097/45796 that it is possible to combine an automated teller machine, a cash machine, with an internet access kiosk and use the same card reader for both activities in order to reduce the hardware required. However this application only relates to the ability of the user to purchase designated services from designated retailers identified within the particular kiosk. Thus this prior art is therefore only concerned with the reduction in the hardware which is required to allow a user to obtain money using a card and/or have the purchase of services charged to the same card using the same apparatus with predetermined services which are provided at a predetermined location and on pre-programmed apparatus.

The aim of the present invention is to provide a means of generating and retaining a "shopping list" of goods or services by a user which is convenient to the user and which can be used in a domestic environment and using domestically available apparatus. A further aim is to allow access to the retail organisation from whom the goods are being ordered via apparatus which is independently controllable by the user and to allow the retail organisation to generate customer loyalty to that organisation and at the same time enable the user to connect with and gain access to the site of that organisation efficiently, and simply.

In a first aspect of the invention there is provided apparatus controllable by the user for gaining access to the internet and user selectable internet sites thereon, said apparatus, when activated, logging onto the internet site in response to control instructions and characterised in that the apparatus responds to control instructions generated by the insertion or application of a data carrier with a magnetic strip or other identification and data storage means thereon into a data reading means of the apparatus, said data accessible and processed by the apparatus to obtain access details for a designated internet site and generate control instructions to direct the apparatus to find and access the designated site on the system.

Typically, the data reading means is a card reading device along or into which the information carrier in the form of a card is moved by the user in a manner so as to allow information stored on the card to be read by the device.

The apparatus processing means can therefore typically take the information from the card and, if said information is of a predesignated form, the apparatus is activated to access and locate a particular site which matches the instruction generated from the information obtained from the card.

In one embodiment the apparatus is provided as an integral part or connectable with a broadcast data receiver (BDR). A BDR is a device which is typically and increasingly present in many domestic premises and is connected to a television or other similar display means. The BDR is provided with a means for receiving data representing video and/or audio data which is broadcast from a remote location, via any of cable, satellite or terrestrial transmission systems, and processing the same to generate television and/or radio programming for viewing. The BDR also typically has a communication link to an external communication system which allows the sending of information and data from the BDR to remote locations.

In accordance with this invention the BDR forms the apparatus which is used to gain access to the internet site in response to the data carrier provided by the user and the internet site, when accessed is displayed on screen in the users own premises.

In one embodiment, the apparatus generates the internet site access instructions from a data carrier, typically in the form of a card which is issued to the user by a retail organisation. In one embodiment the card can be provided to be retained and used as a "loyalty card" or alternatively can simply be provided as a disposable item. Thus the user may have at any one time a number of said carriers and by selectively allowing the information to be read therefrom, can select to access internet sites accessed via the information provided from the carrier.

In one embodiment the apparatus can also obtain specific user details from the data on the carrier and thereby perform a logging on or registration process when the internet site is accessed. This, in conjunction with the fact that the apparatus is already aware of the site address associated with the organisation, allows the apparatus to log onto that particular site without the user having to enter any further information.

In an alternative embodiment, when activated by a user, the apparatus accesses a preconfigured internet server and transfers to the server the data obtained from the data carrier and the server responds with details of the internet site which match the detail obtained from the carrier.

In a further feature of the invention the apparatus also provides a means of compiling details for a particular product or list of goods by the user and storing the same and, when the internet site for an appropriate retail organisation is opened the list or selected products details can be transferred from memory in the apparatus to the internet site to allow the products to be ordered.

In one embodiment the apparatus includes memory means which allows the product details to be compiled and stored over time to compile a list of products which can in due course be transferred to the appropriate retail organisation. In one embodiment a template can be obtained for the insertion of product information from the data held on the carrier issued by a particular retail organisation and said template provided in a manner to be compatible with the internet site of the retail organisation thereby allowing the same to be quickly entered into and accepted by the internet site.

This invention therefore provides a means whereby a retail organisation can provide a card or other form of data carrier which can act as a form of loyalty card for the user and which is also of benefit to the user as it prevents the need for the user to undergo the procedural steps to access particular sites. Rather, the user can simply move or swipe the card as required with respect to the apparatus and the apparatus will then proceed to access the site. This allows users who may not be particularly au fait with computer technology, to more easily gain access to particular sites and furthermore, from the point of view of the retail organisation, directs the user to their particular site which is of course of importance to them in subsequent sales of products or services.

It also allows the possibility for the user to use apparatus when selectively activated, to order goods or services from a remote organisation via the communications link easily. This means that a user can select a number of goods and thereby create a shopping list of desired goods. The shopping list details can then be transmitted to the remote organisation who can provide said goods and, in a few hours or days, the remote organisation can provide the goods which have been selected by the user.

It should also be appreciated that reference to a retail organisation should be interpreted in the broadest sense as encompassing any organisation, whether they be a public or private company, partnership, government body, charity etc., from which a user may obtain goods or services.

A specific embodiment of the invention is now described with reference to the accompanying drawings; wherein
Figure 1 illustrates apparatus in accordance with one embodiment of the invention; and
Figure 2 illustrates an embodiment of the system in accordance with the invention.

Conventionally, if a user wishes to access a particular internet site of a retail organisation, the user is required to enter the internet site address into their internet enabled apparatus such as a personal computer or BDR. Furthermore, once they have found the site the user is then typically required to enter a unique number or code to identify the user and allow that user to have access to an account, set up an account and/or make purchases. Thus the user typically has to perform a number of stages in order to access the relevant site either by keying in the appropriate internet site address, using a search engine on the internet to try and identify the site of interest and/or using a favourites option in their browser. In any event, at present, for a user to access a particular website, they have to take a number of positive and time consuming steps to access a particular organisation's website.

From the point of view of the retail organisation they would rather that potential customers accessing their internet site find this process as easy as possible so that they are encourage to return to the internet site. The invention which is the subject of this application aims to provide apparatus and a system which makes the access a significantly easier process than is currently the case.

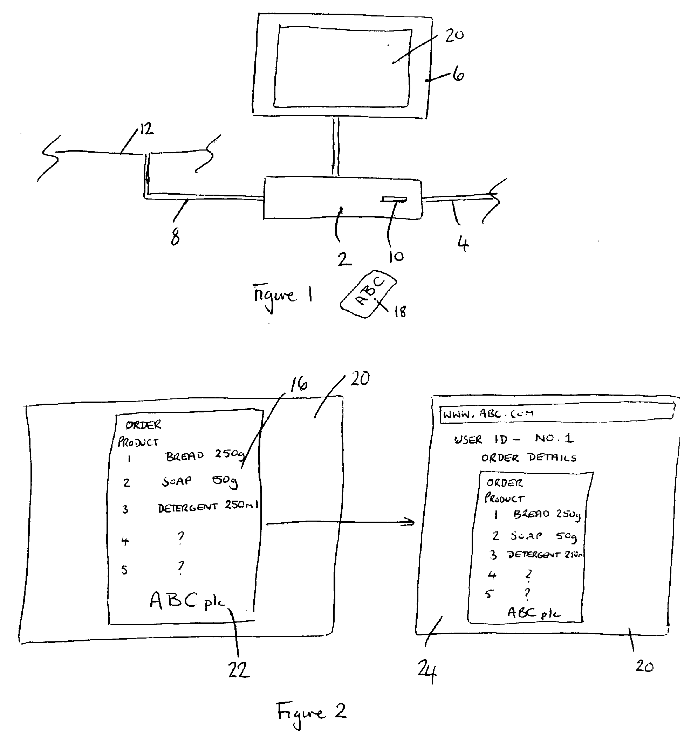

In accordance with the invention Figure 1 illustrates one embodiment where the invention is provided as part of a BDR. The BDR 2 includes a connection 4 for the reception of broadcast data, and is provided to process the same and generate video and/or audio for viewing as television or radio programmes, in this case via the television set 6. The operation of a BDR is relatively well known in conjunction with television sets and for this reason is not described in detail here. However the BDR includes a communication link 8 to an external communication system 12 such as a telecommunications network or cable system and is provided with an appropriate modem facility to allow data to be transmitted from the BDR to the external network and internet access to be achieved. In accordance with the invention the BDR also includes a data carrier reader, in this form accessible via a slot 10 into which a card can be inserted and, when inserted, the data held thereon on a memory circuit or magnetic strip can be retrieved and read.

Cards 18 can be provided by any of a number of retail organisations to provide to users the opportunity to access the retail organisation site by inserting the card into the slot 10. The apparatus can then receive and process data held on the cards to enable the associated apparatus to identify data relating to a particular internet site address, and generate an instruction to automatically access the internet site of the address. Furthermore the card may include data relating to the particular user which can be accessed by the apparatus to allow the apparatus to log into the particular user's account details on the internet site.

The particular means for reading the card can be any conventional means. The apparatus, although described with reference to a BDR can be used with any communications apparatus such as a personal computer but is particularly suited for use in domestic environments. The invention allows communication between user selected retail organisations and the user relatively easily thereby encouraging loyalty to the organisation by the user.

An example of how the invention can be used is illustrated in Figure 2 wherein a user over a period of time can compile a list of products which they require from a particular organisation. From time to time or at the same time the user can compile a list of products 16 which can be displayed on the display screen 20 as shown and may input details using any conventional data input method. The products may be entered onto a particular template 22 provided by the particular retail organisation, in this case the organisation ABC. The template data can be generated on screen from data obtained from the data carrier 18 when previously inserted into a card reader as previously described.

When the list is completed the user can insert the data carrier 18 for the appropriate retail organisation into the apparatus and the internet site is accessed as described previously. The user can then select to transfer the template with the product details to the internet site to generate the internet site display 24 again on screen 20, whereupon the same is transferred to the retail organisation as an order. Thus, in this particular example, once the list is made by the user there is no need for the user to interact with the internet site directly so making the whole process significantly easier than is conventionally the case.

## Claims

1. Apparatus controllable by the user for gaining access to the internet and user selectable internet sites thereon, said apparatus, when activated, logging onto the internet site in response to control instructions and characterised in that the apparatus responds to control instructions generated by the insertion or application of a data carrier with a magnetic strip or other identification and data storage means thereon into a data reading means of the apparatus, said data accessible and processed by the apparatus to obtain access details for a designated internet site and generate control instructions to direct the apparatus to find and access the designated site on the system.

2. Apparatus according to claim 1 characterised in that the data reading means is a card reading device along or into which the information carrier in the form of a card is moved by the user in a manner so as to allow information stored on the card to be read by the device.

3. Apparatus according to claim 2 characterised in that the apparatus processing means retrieves the information from the card and, if said information is of a predesignated form, the apparatus is activated to access and locate a particular site which matches the instruction generated from the information obtained from the card.

4. Apparatus according to claim 1 characterised in that the apparatus is provided as an integral part of, or is connectable with, a broadcast data receiver (BDR).

5. Apparatus according to claim 4 characterised in that the BDR incorporates a communication link to an external communication system which is used to gain access to the internet site in response to the data carrier provided by the user.

6. Apparatus according to claim 4 characterised in that a display screen connected to the BDR is used to display the internet site when accessed.

7. Apparatus according to claim 1 characterised in that the data carrier is issued to the user by a retail organisation and carries data identifying the internet site of the retail organisation.

8. Apparatus according to claim 1 characterised in that in addition to carrying data allowing the identity of a particular internet site to be accessed, the data carrier includes data relating to a specific user to allow the apparatus to perform a logging on or registration process once the internet site is accessed.

9. Apparatus according to claim 1 characterised in that when activated by a user, the apparatus accesses a preconfigured internet server and transfers to the server data obtained from the data carrier and the server responds with details of any internet sites which match the data obtained from the carrier.

10. Apparatus according to claim 9 characterised in that the apparatus then accesses the identified internet site.

11. Apparatus according to claim 1 characterised in that the apparatus includes a means of compiling details for a particular product or list of goods by the user and storing the same and transferring the details from the apparatus to the accessed internet site selected by the user.

12. Apparatus according to claim 11 characterised in that a template is constructed for display to the user for the insertion of product information, from data held on the carrier issued by a particular retail organisation.

13. Apparatus according to claim 12 characterised in that said template is compatible with the internet site of the retail organisation thereby allowing the same to be entered into and accepted by the internet site via the apparatus.

14. A system for the ordering of products or services from a retail organisation via an internet site said system comprising the steps of a user defining a product or service to be ordered and selectively storing the same in a memory, the user selectively accessing the internet site by inserting a data carrier provided by the retail organisation into a data carrier reading apparatus, said carrier including data relating to an internet site address, and said internet site accessed via appropriate apparatus in response to the data obtained from the carrier and, when accessed, the user defined product or service details are entered onto the internet site to be ordered.
